# EUROPÄISCHE PATENTSCHRIFT

(11) **EP 1 839 914 B1**
(45) Veröffentlichungstag und Bekanntmachung des Hinweises auf die Patenterteilung: **24.06.2009**
(21) Anmeldenummer: 07450025.7
(22) Anmeldetag: 14.02.2007
(51) Int. Cl.: B60C 27/10

(54) **Spannvorrichtung für eine Gleitschutzkette**
Tension device for an anti-skid chain
Dispositif de serrage pour une chaîne antidérapante

(30) Priorität: 29.03.2006 AT 5412006
(43) Veröffentlichungstag der Anmeldung: 03.10.2007
(73) Patentinhaber: Pewag Schneeketten GMBH & Co KG, 8020 Graz (AT)
(72) Erfinder: Pengg, Ägyd, 9020 Klagenfurt (AT)
(74) Vertreter: Patentanwaltskanzlei Matschnig & Forsthuber OG

(56) Entgegenhaltungen:
- WO-A-20/05095129
- AT-B- 408 635
- DE-B3-2102004 037 33

## Beschreibung

Die Erfindung betrifft eine Spannvorrichtung für eine Gleitschutzkette mit einem Gehäuse und einem Betätigungsglied, das zumindest zwei Blockierpositionen für einen durch eine Gehäuseöffnung in das Gehäuse einziehbaren Spannstrang aufweist, der innerhalb des Gehäuses an eine in Aufwickelrichtung vorgespannte und um ihre Achse drehbar gelagerte Wickelrolle angeschlossen ist; dabei ist in einer ersten Blockierposition des Betätigungsglieds der Spannstrang gegen Bewegung in seiner Spannrichtung blockierbar und in einer zweiten Blockierposition gegen Bewegung entgegen seiner Spannrichtung, und an der Wickelrolle ist zumindest ein Zahnkranz mit einem ihm zugeordneten Klinkenelement vorgesehen.

Spannvorrichtungen werden bei Gleitschutzketten, insbesondere Schneeketten, verwendet, um nach der Montage ein unerwünschtes Rücklaufen des Spannstranges entgegen der Spannrichtung zu vermeiden. Der Spannstrang ist zumeist ein Spannseil, kann jedoch auch z.B. als Spannkette ausgebildet sein.

Die AT 408 635 B beschreibt eine gattungsbildende Spannvorrichtung mit einem Betätigungsglied mit ebenfalls drei Stellungen. Zwei miteinander drehfest verbundene Klinkenräder sind jeweils Sperrklinken zugeordnet und weisen gegenläufige Sperrrichtungen auf. Das Betätigungsglied wirkt auf die zwei Sperrklinken, wobei in einer ersten Raststellung die eine Sperrklinke in das ihr zugeordnete Klinkenrad eingreift, während in einer zweiten Raststellung die andere Sperrklinke in das ihr zugeordnete Klinkenrad eingreift, sodass die Bewegung in bzw. gegen die Spannrichtung freigegeben und in bzw. gegen die Gegenrichtung blockiert ist; in einer dritten Stellung, einer dazwischen einstellbaren Freigabestellung, greift keine der Sperrklinken ein und die Blockierung ist aufgehoben. Diese Vorrichtung ist durch die beiden Sperrklinken aufwändig und fehleranfällig; außerdem ist die Bedienung durch die drei Stellungsmöglichkeiten kompliziert.

Die AT 006 475 U1 beschreibt eine Spannvorrichtung mit einem Klinkenrad und einer ihm zugeordneten, mittels eines Betätigungsgliedes betätigbaren Sperrklinke, wobei das Betätigungsglied bezüglich des Gehäuses verschiebbar ist und drei Stellungen aufweist, allerdings neben einer Blockierstellung, in der der Spannstrang bzw. das Klinkenrad vollständig blockiert ist, eine Haltestellung, in der das Klinkenrad in Aufwickelrichtung des Spannstranges drehbar ist, und eine Freigabestellung, worin die Blockierung gänzlich aufgehoben ist. Eine abwechselnde Blockierung einmal für die eine, einmal für die andere Richtung kann diese Vorrichtung somit nicht leisten.

Es ist Aufgabe der Erfindung, die genannten Nachteile zu überwinden und eine Spannvorrichtung mit zwei Sperrstellungen zu schaffen, bei denen jeweils die Bewegung des Spannstranges in eine Richtung (nämlich in bzw. gegen die Aufwickelrichtung) zugelassen und die andere Richtung blockiert ist.

Diese Aufgabe wird von einer Spannvorrichtung der eingangs beschriebenen Art gelöst, bei welcher erfindungsgemäß zwei an einer Stirnfläche der Wickelrolle konzentrisch angeordnete, mit der Wickelrolle drehfest verbundene und zueinander gegenläufig orientierte Stirnzahnkränze vorgesehen sind und das Betätigungsglied als über den Zahnkränzen angeordnete Drehhebel realisiert ist, der zwischen zwei den Blockierpositionen entsprechende Endstellungen bewegbar ist, wobei zwischen Drehhebel und Zahnkränzen eine Klinkenscheibe vorgesehen ist, die drehfest im Gehäuse positioniert ist und zumindest eine äußere Lasche sowie zumindest eine innere Lasche aufweist. Die Laschen sind elastisch verbiegbar; in den Endstellungen des Drehhebels werden jeweils entweder die innere(n) Lasche(n) oder die äußeren(n) Lasche(n) gegen den entsprechenden Zahnkranz gedrückt und kommen mit diesem blockierend zum Eingriff.

Diese Lösung erreicht das gestellte Ziel auf einfache und doch effiziente Weise. Im Gegensatz zu herkömmlichen Vorrichtungen ermöglicht die Erfindung die Verwendung eines einzelnen, zudem fest im Gehäuse angeordneten Klinkenelements, was die Bedienung sowie die Robustheit des Geräts verbessert.

In einer bevorzugten Ausführungsform der Erfindung, die eine einfache Realisierung der Blockierwirkung in jeweils eine Drehrichtung gestattet, ist die Gestaltung der Laschen so gewählt, dass die Lasche jeweils zumindest einen gegen den zugeordneten Zahnkranz gerichteten Klinkenzahn zum Abstützen eines Zahnes des Zahnkranzes und Hemmung der entsprechenden Drehbewegung aufweist.

Außerdem ist es günstig, wenn der Drehhebel und die Klinkenscheibe mit dem Wickelrad koaxial sind und die Laschen als an einem Grundkörper angefügte, zum Teil freistehende Kreisringsektoren gestaltet sind.

Die Erfindung samt ihren Vorzügen und vorteilhaften Ausgestaltungen wird im Folgenden anhand eines nicht einschränkenden Ausführungsbeispiels näher erläutert, das in den beigefügten Zeichnungen dargestellt ist. Die Figuren zeigen
- Fig.1: eine erfindungsgemäße Spannvorrichtung in Seitenansicht,
- Fig. 2: die Spannvorrichtung in Ansicht von oben,
- Fig. 3: eine Seitenansicht der geöffnete Spannvorrichtung mit entfernten Gehäusedeckel und Betätigungsglied,
- Fig. 4: die Spannvorrichtung in explodierter Darstellung, und
- Fig. 5a und 5b: zwei Details zur Verdeutlichung des erfindungsgemäßen Wirkprinzips.

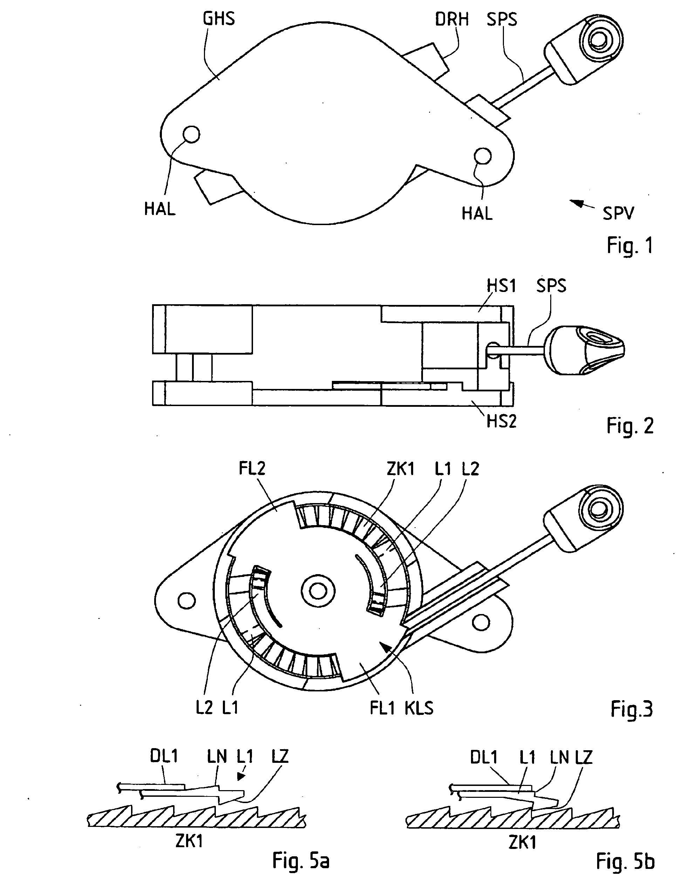

Gemäß Fig. 1 und 2 weist eine erfindungsgemäße Spannvorrichtung SPV ein Gehäuse GHS, bestehend aus zwei Gehäuseschalen HS1,HS2, auf, an dem an geeignet gestalteten Haltevorrichtungen HAL, z.B. mit (nicht gezeigten) Stiften und/oder Haken, eine oder mehrere Ketten befestigt werden können. Ein Spannseil SPS, das zum Spannen einer Gleitschutzkette oder Schneekette verwendet werden kann, ist im Inneren der Spannvorrichtung aufgerollt. Ein in dem Gehäuse verschwenkbar gelagerter Drehhebel DRH ragt als Betätigungsglied mit Fortsätzen durch Öffnungen an gegenüberliegenden Stellen des Gehäuses heraus. Mittels des Drehhebels kann je nach Bedarf festgelegt werden, in welche gewünschte Richtung das Spannseil freigegeben ist, während zugleich eine Bewegung in die entgegengesetzte Richtung blockiert ist.

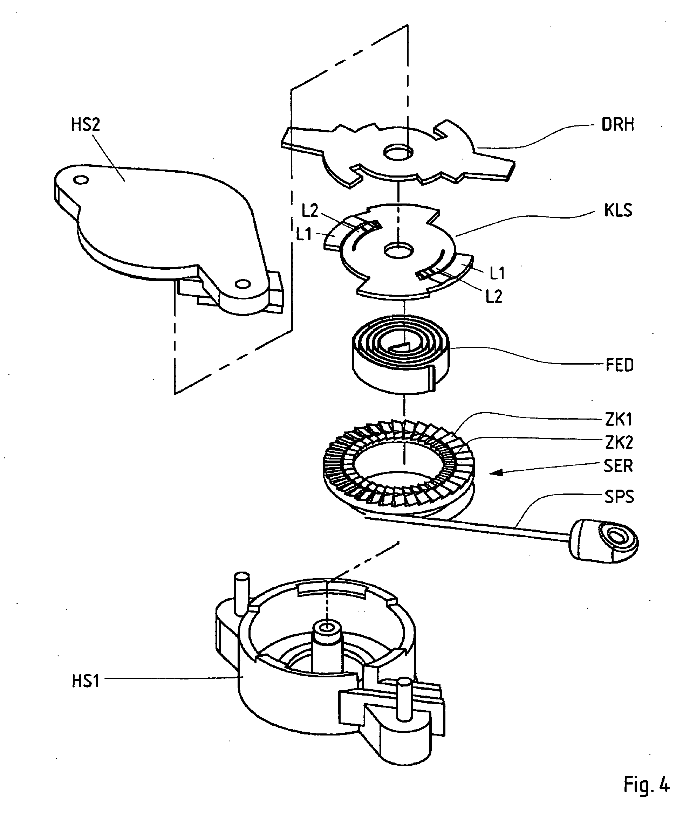

Der innere Aufbau geht aus der eröffneten Ansicht Fig. 3 (Gehäusedeckel HS2 und Drehhebel DRH sind entfernt) und der explodierten Darstellung der Fig. 4 hervor. Zum Blockieren des Spannseiles SPS in eine Richtung und Freigabe in die entsprechende Gegenrichtung ist eine Seilrolle SER mit zwei an einer Stirnfläche der Seilrolle befindlichen, konzentrischen, zueinander gegenläufigen Zahnkränzen ZK1,ZK2 vorgesehen. Die Seilrolle dient zum Aufwickeln des Spannstranges und ist zu diesem Zweck mit einer Feder FED in Aufwickelrichtung vorgespannt.

Der Drehhebel DRH (in Fig. 3 aus darstellerischen Gründen nicht gezeigt) wirkt über eine koaxiale Klinkenscheibe KLS auf die Zahnkränze ZK1,ZK2. Die Klinkenscheibe ist mittels Flügelränder FL1,FL2 in entsprechenden Ausnehmungen im Inneren der Gehäuseschale HS1 drehfest gelagert, während das Betätigungsglied um die zentrale Achse schwenkbar ist. Drehhebel DRH und Klinkenscheibe KLS sind als Scheiben mit angefügten Kreisringsektoren gestaltet, wobei die Enden einzelner Kreisringsektoren als Laschen hervorragen. Die Klinkenscheibe weist elastisch verformbare Laschen L1,L2 auf, wobei jeweils die äußeren Laschen L1 mit dem äußeren Zahnkranz ZK1, die inneren Laschen L2 mit dem inneren Zahnkranz ZK2 zusammenwirken.

Wie aus den Detailbildern der Fig. 5a, 5b am Beispiel einer Lasche L1 erkennbar ist, weisen die Laschen L1,L2 an ihrem Ende jeweils einen dem Zahnkranz zugewandten Zahn LZ sowie eine gegenüber angeordnete Nocke LN auf. Wegen der Fixierung der Klinkenscheibe im Gehäuse ist die Lasche L1 und insbesondere der Zahn LZ entlang der Drehrichtung des Zahnkranzes unbeweglich, jedoch ist durch (elastisches) Verbiegen der Lasche eine Bewegung zum Zahnkranz hin möglich. Durch Drehung des Drehhebels DRH in eine erste Endstellung wird, wie in Fig. 5b gezeigt, eine Decklasche DL1 des Drehhebels über die äußeren Laschen L1 geschoben und dadurch letztere gegen den Zahnkranz ZK1 gedrückt, sodass diese mit ihren Zähnen LZ in den Zahnkranz eingreifen. Dadurch wird die Seilrolle in eine Richtung durch Hemmung der Bewegung wegen des eingreifenden Zahnes LZ blockiert, während die Drehung in die andere Richtung nach Art einer Ratsche unter Ausnutzung der elastischen Verformbarkeit des Zahnes LZ möglich ist. Wird der Drehhebel in die andere Endstellung - im gezeigten Ausführungsbeispiel durch eine Drehung um ca. 40° - gedreht, gibt die Decklasche wie in Fig. 5a gezeigt die Lasche L1 frei, die elastisch in ihre ungespannte Position zurückgeht und den Zahnkranz ZK1 freigibt. Dagegen ergibt sich nun in entsprechender Weise, freilich mit umgekehrten Umlaufsinn, das gleiche Spiel mit den inneren Laschen L2 der Klinkenscheibe; diese greifen nun in den inneren Zahnkranz ZK2 ein, und es ergibt sich eine Blockierung in die entgegengesetzte Richtung.

## Patentansprüche

1. Spannvorrichtung (SPV) für eine Gleitschutzkette mit einem Gehäuse (HS1,HS2) und einem Betätigungsglied (DRH), das zumindest zwei Blockierpositionen für einen durch eine Gehäuseöffnung in das Gehäuse einziehbaren Spannstrang (SPS) aufweist, der innerhalb des Gehäuses an eine in Aufwickelrichtung vorgespannte und um ihre Achse drehbar gelagerte Wickelrolle (SER) angeschlossen ist, wobei in einer ersten Blockierposition des Betätigungsglieds der Spannstrang gegen Bewegung in seiner Spannrichtung blockierbar ist und in einer zweiten Blockierposition gegen Bewegung entgegen seiner Spannrichtung, wobei an der Wickelrolle zumindest ein Zahnkranz mit einem ihm zugeordneten Klinkenelement vorgesehen ist,
**dadurch gekennzeichnet, dass**
zwei an einer Stirnfläche der Wickelrolle konzentrisch angeordnete, mit der Wickelrolle drehfest verbundene und zueinander gegenläufig orientierte Stirnzahnkränze (ZK1,ZK2) vorgesehen sind und das Betätigungsglied als über den Zahnkränzen angeordnete Drehhebel (DRH) realisiert ist, der zwischen zwei den Blockierpositionen entsprechende Endstellungen bewegbar ist, wobei zwischen Drehhebel und Zahnkränzen eine Klinkenscheibe (KLS) vorgesehen ist, die drehfest im Gehäuse positioniert ist und zumindest eine äußere Lasche (L1) sowie zumindest eine innere Lasche (L2) aufweist, wobei die Laschen elastisch verbiegbar sind, und in den Endstellungen jeweils entweder die innere(n) Lasche(n) oder die äußeren(n) Lasche(n) durch den Drehhebel gegen den entsprechenden Zahnkranz gedrückt werden und mit diesem zum Eingriff kommen.

2. Spannvorrichtung nach Anspruch 1, **dadurch gekennzeichnet, dass** die Lasche (L1,L2) jeweils zumindest einen genen den zugeordneten Zahnkranz (ZK1,ZK2) gerichteten Klinkenzahn (LZ) zum Abstützen eines Zahnes des Zahnkranzes und Hemmung der entsprechenden Drehbewegung aufweist (Fig. 5b).

3. Spannvorrichtung nach Anspruch 1 oder 2, **dadurch gekennzeichnet, dass** der Drehhebel und die Klinkenscheibe mit dem Wickelrad koaxial sind und die Laschen (L1,L2) als an einem Grundkörper angefügte, zum Teil freistehende Kreisringsektoren gestaltet sind.

## Claims

1. A tensioning device (SPV) for an anti-skid chain comprising a housing (HS1, HS2) and an actuating member (DRH), which member has at least two locking positions for a tensioning cord (SPS) adapted to be drawn into the housing through an opening in the housing and which is connected inside the housing to a winding pulley (SER) biased in the winding direction and mounted for rotation about its axis, wherein, in a first locking position of the actuating member, the tensioning cord can be prevented from moving in its tensioning direction and, in a second locking position, from moving contrary to its tensioning direction, wherein the winding pulley is provided with at least one gear rim having an allocated ratchet element,
**characterized in that**
two concentric crown gear rims (ZK1, ZK2) are provided which are non-rotatably connected to the winding pulley and contrarily oriented relative to each other, and that the actuating member is configured as a rotary lever (DRH) disposed above the gear rims and displaceable between two end positions corresponding to the locking positions, and between the rotary lever and the gear rims a ratchet disk (KLS) is provided which is non-rotatably mounted in the housing and has at least one outer tongue (L1) and at least one inner tongue (L2), said tongues being resiliently deformable, and in the end positions either the inner tongue(s) or the outer tongue(s) are respectively pressed by means of the rotary lever against the corresponding gear rim to engage therewith.

2. The tensioning device as defined in claim 1, **characterized in that** said tongues (L1, L2) each have at least one ratchet tooth (LZ) positioned against said allocated gear rim (ZK1, ZK2) to bear against a tooth of the gear rim to prevent corresponding rotary motion thereof (Fig. 5b).

3. The tensioning device as defined in claim 1 or claim 2, **characterized in that** said rotary lever and said ratchet disk are coaxial with said winding pulley and said tongues (L1, L2) are configured as partially detached ring segments joined to a base element.

## Revendications

1. Dispositif de serrage (SPV) pour une chaîne antidérapante, comportant un boîtier (HS1, HS2) et un organe de manoeuvre (DRH), qui possède au moins deux positions de blocage pour un câble de serrage (SPS), qui peut être enfiché dans le boîtier à travers une ouverture dudit boîtier et qui est attaché à l'intérieur du boîtier à une bobine d'enroulement (SER) précontrainte dans la direction de déroulement et montée de manière à pouvoir tourner autour de son axe, sachant que dans une première position de blocage de l'organe de manoeuvre, le câble de serrage peut être bloqué de manière à empêcher tout mouvement dans sa direction de serrage et, dans une deuxième position de blocage, il peut être bloqué de manière à empêcher tout mouvement en sens opposé à sa direction de serrage, au moins une couronne dentée avec un cliquet associé à celle-ci étant prévue sur la bobine d'enroulement,
**caractérisé en ce que**
il est prévu deux couronnes dentées frontales (ZK1, ZK2), disposées concentriquement sur une face frontale de la bobine d'enroulement, reliées de manière solidaire en rotation avec la bobine d'enroulement et orientées en sens inverse l'une par rapport à l'autre, et l'organe de manoeuvre est réalisé sous la forme d'un levier rotatif (DRH), qui est disposé au-dessus des couronnes dentées et qui est apte à se déplacer entre deux positions finales correspondant aux positions de blocage, une plaque (KLS) pour le cliquet étant prévue entre le levier rotatif et les couronnes dentées et étant positionnée de manière immobile en rotation dans le boîtier et comportant au moins une patte (L1) extérieure, ainsi qu'au moins une patte (L2) intérieure, lesdites pattes étant flexibles de manière élastique et, dans les positions finales, respectivement la ou les pattes intérieures ou la ou les pattes extérieures étant poussées par le levier rotatif contre la couronne dentée correspondante et étant amenées en prise avec celle-ci.

2. Dispositif de serrage selon la revendication 1, **caractérisé en ce que** la patte (L1, L2) comporte respectivement au moins une dent (LZ), orientée vers la couronne dentée (ZK1, ZK2) associée et destinée à supporter une dent de la couronne dentée et à bloquer le mouvement de rotation correspondant (figure 5b).

3. Dispositif de serrage selon la revendication 1 ou 2, **caractérisé en ce que** le levier rotatif et le disque pour le cliquet sont disposés coaxialement avec la bobine d'enroulement, et les pattes (L1, L2) sont réalisées sous la forme de secteurs de cercle attachés à un corps de base et disposés, en partie, en porte-à-faux.
